# EUROPÄISCHE PATENTSCHRIFT

(11) **EP 3 218 110 B1**
(45) Veröffentlichungstag und Bekanntmachung des Hinweises auf die Patenterteilung: **26.09.2018**
(21) Anmeldenummer: 15804060.0
(22) Anmeldetag: 09.11.2015
(51) Int. Cl.: B01L 3/02, B65D 13/02, B65D 47/10, B01L 3/00

(54) **SUBSTANZBEHÄLTER**
SUBSTANCE CONTAINER
CONTENANT DE SUBSTANCE

(30) Priorität: 10.11.2014 CH 17382014
(43) Veröffentlichungstag der Anmeldung: 20.09.2017
(73) Patentinhaber: Chemspeed Technologies AG, 4414 Füllinsdorf (CH)
(72) Erfinder: GUELLER, Rolf, CH-5027 Herznach (CH); SCHNEIDER, Michael, CH-5070 Frick (CH); THALER, Thomas, CH-4242 Laufen (CH); SCHINDLER, Markus, CH-6373 Ennetbürgen (CH)
(74) Vertreter: Bohest AG
(86) Internationale Anmeldenummer: PCT/CH2015/000166
(87) Internationale Veröffentlichungsnummer: WO 2016/074106

(56) Entgegenhaltungen:
- WO-A1-03/089029
- WO-A1-2005/065966
- US-A- 5 052 588
- US-A1- 2004 122 359

## Beschreibung

Die Erfindung betrifft einen Behälter für eine Substanz gemäss dem Oberbegriff des unabhängigen Anspruchs 1. Die Erfindung betrifft auch ein Kit zur Herstellung eines solchen Behälters sowie ein Verfahren zum Befüllen und ein Verfahren zum Entleeren eines solchen Behälters.

Eine Substanz- bzw. Verbindungsbibliothek ist das Herzstück eines jeden chemischen Unternehmens, insbesondere der Pharmaindustrie. Viele Verbindungen aus oft jahrzehntelanger Synthesetätigkeit sind in einer solchen Bibliothek abgelegt und bilden eine Quelle für viele Screening-Aktivitäten. Die gelagerten Substanzen bzw. Verbindungen sind oft sehr wertvoll, schwierig zu synthetisieren, teuer zu kaufen oder zu extrahieren und oftmals sind die Substanzen weltweit in nur ganz geringen Mengen überhaupt vorhanden.

Pharmazeutische Unternehmen halten in ihren Substanzbibliotheken oft eine Million und mehr Substanzen vorrätig und setzen zur Verwaltung eigene Substanz-Management-Gruppen ein, deren Aufgabe es ist, benötigte Substanzmuster in oft kleinsten Mengen bis hinunter in den Sub-Milligramm-Bereich aus der Bibliothek bereitzustellen, z.B. für spezielle biologische Tests. Hierbei muss die benötigte, oft sehr kleine Substanzmenge aus dem Vorratsbehälter der Bibliothek, welcher oft sehr wenig Substanz enthält, entnommen und in ein Transportgefäss abgefüllt werden (sog. 1:1-Abfüllung). Die abzufüllenden bzw. zu dosierenden Substanzen können dabei ganz unterschiedliche Konsistenzen aufweisen, welche jeweils den Einsatz von spezifischen Abfüllwerkzeugen erfordern. Je nach Konsistenz bzw. physikalischen Eigenschaften der abzufüllenden Substanz kann die Abfüllung nur manuell erfolgen, wozu insbesondere bei grösseren Unternehmen ein verhältnismässig grosser zeitlicher und/oder personeller Aufwand erforderlich ist.

US2004122359 ist Bestandteil des Standes der Technik. Durch die vorliegende Erfindung soll nun ein Substanzbehälter zur Verfügung gestellt werden, mit dem die vorstehend geschilderten Abläufe bei der 1:1 -Abfüllung deutlich vereinfacht werden können. Konkreter soll ein einfach herstellbarer und deshalb kostengünstiger Substanzbehälter geschaffen werden, der universell für Substanzen praktisch jeglicher Konsistenz geeignet ist und speziell auf die Aufnahme kleinster Substanzmengen bis hinunter in den Milligramm- und Sub-Milligramm-Bereich zugeschnitten ist. Ferner soll der Substanzbehälter einen optimalen Schutz der in ihm aufgenommenen Substanz gegenüber äusseren Einflüssen gewährleisten und gleichzeitig auch als Lager- oder Transportbehälter geeignet sein.

Diese der Erfindung zugrunde liegende Aufgabe wird durch den erfindungsgemässen, im unabhängigen Anspruch 1 definierten Behälter zur Aufnahme und Abgabe einer Substanz gelöst. Das erfindungsgemässe Kit zur Herstellung eines Behälters ist Gegenstand des unabhängigen Anspruchs 13, während die erfindungsgemässen Verfahren zum Befüllen bzw. Entleeren eines Behälters Gegenstände der unabhängigen Ansprüche 14 und 21 sind. Besonders vorteilhafte Weiterbildungen und Ausgestaltungen ergeben sich aus den abhängigen Ansprüchen.

Hinsichtlich des Substanzbehälters besteht das Wesen der Erfindung in Folgendem: Ein Behälter zur Aufnahme und Abgabe einer Substanz umfasst ein Röhrchen, einen im Röhrchen dicht gleitend verstellbar angeordneten Stempel und eine einseitig geschlossene Hülse, in der das Röhrchen aufgenommen ist. Der Stempel ragt aus einem Ende des Röhrchens heraus und füllt das Röhrchen nicht vollständig aus, so dass im Bereich des innerhalb der Hülse befindlichen Endes des Röhrchens eine Substanzkammer verbleibt, die ein Aufnahmevolumen aufweist, das durch Verstellen des Stempels anpassbar ist.

Durch diese spezielle Ausbildung des Substanzbehälters ist er zur einfachen Befüllung mit Substanzen praktisch jeglicher Konsistenz geeignet und schützt die in ihm enthaltene Substanz zuverlässig vor äusseren Einflüssen. Der Substanzbehälter besteht vollständig aus einfachen Komponenten ist dadurch so kostengünstig herstellbar, dass er nach jedem Gebrauch weggeworfen werden kann.

Der Stempel kann im Röhrchen bewegt werden, so dass das Volumen der Substanzkammer einfach eingestellt werden kann.

Vorteilhafterweise liegt die Hülse um das Röhrchen herum relativ eng an, wobei aber gewährleistet ist, dass das Röhrchen in der Hülse axial bewegbar bleibt.

Mit Vorteil bestehen der Stempel, das Röhrchen und die Hülse aus Glas. Glas als Material ist in der chemischen Forschung generell als inertes Material akzeptiert und resistent gegenüber den allermeisten Chemikalien. Für Varianten, wo weniger Breite bezüglich chemischer Resistenz verlangt ist, sind grundsätzlich aber auch andere Materialien für den Stempel, das Röhrchen und die Hülse möglich. Diese Materialien sollten aber so hart sein, dass sie die weiter unten noch erläuterte Schneidfunktion ebenfalls übernehmen können.

Gemäss einer vorteilhaften Ausführungsform ragt das (Glas-)Röhrchen aus der Hülse heraus und sind das (Glas-) Röhrchen und die (Glas-)Hülse längs des Rands der (Glas-)Hülse an deren offenem Ende miteinander verbunden, vorzugsweise verschweisst. Besonders vorteilhafterweise sind auch der (Glas-)Stempel und das (Glas-)Röhrchen längs des Rands des (Glas-)Röhrchens an dessen einem Ende miteinander verbunden, vorzugsweise ebenfalls verschweisst. Durch diese gegenseitige Verbindung bzw. vorzugsweise Verschweissung der drei Bestandteile des Substanzbehälters ist die in ihm enthaltene Substanz zuverlässig vor äusseren Einflüssen geschützt.

Gemäss einer weiteren vorteilhaften Ausführungsform ragt der Stempel aus der Hülse heraus und ist der Stempel mit der Hülse verbunden, vorzugsweise verschweisst.

Gemäss einer weiteren vorteilhaften Ausgestaltung ist das (Glas-)Röhrchen zylindrisch und weist einen Innendurchmesser im Bereich von 0.05 bis 5 mm, vorzugsweise 0.1 bis 2 mm, besonders bevorzugt 0.1 bis 1 mm auf. Mit diesen Dimensionen lassen sich Dosiermengen von einigen Hundert mg bis hinunter in den Sub-Milligramm-Bereich realisieren.

Vorteilhafterweise weist das (Glas-)Röhrchen eine Wandstärke im Bereich von 0.03 bis 0.2 mm auf. Durch diese verhältnismässig geringen Wandstärken wirkt der freie Rand des (Glas-)Röhrchens quasi als Schneide, was das Eintauchen bzw. besser Einstechen in Substanzen mit festerer Konsistenz begünstigt. Zusätzlich oder alternativ weist das (Glas-)Röhrchen ein scharfkantig oder schneidenartig ausgebildetes Ende auf.

Zweckmässigerweise weist die (Glas-)Hülse eine Wandstärke im Bereich von 0.03 bis 0.2 mm auf. Wie weiter unten noch erläutert ist, wird der Boden der Hülse in einem Verfahrensschritt mittels des (Glas-)Röhrchens abgesprengt. Die Wandstärke der (Glas-)Hülse muss also gering genug sein, um dieses Absprengen zu ermöglichen.

Vorzugsweise ist der Stempel als (Glas-)Stab oder als zumindest einseitig geschlossenes (Glas-)Rohr ausgebildet. Dies führt zu einer einfachen Herstellbarkeit des (Glas-)Stempels.

Zwecks einfacherer und kostengünstigerer Herstellbarkeit sind das Glasröhrchen und die Glashülse mit Vorteil durch einfaches einseitiges Abschmelzen einer Glasröhre hergestellt.

Gemäss einer bevorzugten Ausführungsform ist die Hülse so ausgebildet, dass sie vom Röhrchen oder dem Stempel durch axiale Kraftbeaufschlagung desselben aufbrechbar ist. Vorteilhafterweise weist dabei die Hülse einen absprengbaren Bodenteil auf. Die Aufbrechbarkeit der Hülse bzw. die Absprengbarkeit deren Bodenteils ist vorzugsweise durch entsprechende Dünnwandigkeit der Hülse oder mittels einer Sollbruchstelle gewährleistet.

Hinsichtlich des Kits zur Herstellung eines Substanzbehälters besteht das Wesen der Erfindung in Folgendem: Ein Kit zur Herstellung eines Behälters umfasst ein Röhrchen, einen Stempel und eine einseitig geschlossene Hülse. Der Stempel ist so auf das Röhrchen abgestimmt, dass er in das Röhrchen einführbar und in diesem dicht gleitend verstellbar ist, wobei der Stempel das Röhrchen nicht vollständig ausfüllt, so dass eine Substanzkammer verbleibt, die ein Aufnahmevolumen aufweist, das durch Verstellen des Stempels anpassbar ist. Die Hülse ist so auf das Röhrchen abgestimmt, dass das Röhrchen in ihr aufnehmbar ist.

Hinsichtlich des Verfahrens zum Befüllen eines Behälters besteht das Wesen der Erfindung in der Durchführung der folgenden Schritte:
- Eintauchen oder Einstechen des mit dem Stempel versehenen Röhrchens in eine Substanz und dadurch Aufnahme von Substanz in die Substanzkammer des Röhrchens,
- Positionieren des Röhrchens zusammen mit dem Stempel in der Hülse, und
- entweder
- Verbinden des Rands der Hülse an deren offenem Ende mit dem Stempel
- oder
- Verbinden des Rands der Hülse an deren offenem Ende mit dem Röhrchen und Verbinden des Rands des Röhrchens an dessen ausserhalb der Hülse befindlichem Ende mit dem Stempel.

Vorzugsweise erfolgt dabei die Verbindung zwischen der Hülse und dem Röhrchen bzw. dem Stempel und/oder die Verbindung zwischen dem Röhrchen und dem Stempel durch Verschweissen, bevorzugt mittels eines CO₂-Lasers, während mit Vorteil die Hülse mit den darin befindlichen Teilen rotiert wird. Es ist aber auch möglich, anstelle einer Verschweissung eine andere Art der Verbindung einzusetzen, beispielsweise etwa eine Kunststoffabdichtung oder Vergiessen mit einem Kunstharz.

Gemäss einer vorteilhaften Ausgestaltung erfolgt nach dem Eintauchen bzw. Einstechen des Röhrchens in die aufzunehmende Substanz ein Dosierschritt, bei dem mittels des Stempels solange Substanz aus dem Röhrchen wieder ausgestossen wird, bis die verbleibende Substanzmenge einer gewünschten Ziel-Menge entspricht. Vorzugsweise wird dabei der Dosierschritt unter der Kontrolle einer Waage durchgeführt. Vorteilhafterweise wird dabei die Substanzkammer entleert und erneut Substanz aufgenommen, falls die gewünschte Zielmenge unterschritten wurde. Zweckmässigerweise wird dabei auch das Aufnahmevolumen der Substanzkammer mittels des Stempels angepasst.

Vorteilhafterweise kann der Substanzbehälter auch unter einer Inertgasatmosphäre luftdicht verschlossen werden.

Hinsichtlich des Verfahrens zum Entleeren eines Behälters besteht das Wesen der Erfindung in der Durchführung der folgenden Schritte:
entweder
   - Absprengen eines Bodenteils der Hülse durch axiale Krafteinwirkung auf das Röhrchen bei festgehaltener Hülse und
   - Ausstossen der in der Substanzkammer enthaltenen Substanz durch axiale Verschiebung des Stempels im Röhrchen
oder
   - Absprengen eines Bodenteils der Hülse durch axiale Krafteinwirkung auf den Stempel und
   - Ausstossen der in der Substanzkammer enthaltenen Substanz durch axiale Verschiebung des Stempels im Röhrchen
oder
   - Aufschlagen des Behälters und dadurch Absprengen eines Bodenteils der Hülse und
   - Ausstossen der in der Substanzkammer enthaltenen Substanz durch axiale Verschiebung des Stempels im Röhrchen.

Im Folgenden wird die Erfindung anhand eines in der Zeichnung dargestellten Ausführungsbeispiels detaillierter beschrieben. Es zeigen:
- Fig. 1-: eine Schnittdarstellung eines Ausführungsbeispiels eines erfindungsgemässen Substanzbehälters im befüllten und fertig zusammengebauten Zustand,
- Fig. 2 -: eine Schnittdarstellung der drei Bestandteile des Substanzbehälters der Fig. 1,
- Fig. 3-9 -: je eine schematische Darstellung der einzelnen Phasen der Befüllung, des Zusammenbaus und der Entleerung des erfindungsgemässen Substanzbehälters,
- Fig. 10-11 -: je eine schematische Darstellung der einzelnen Phasen der Entleerung des erfindungsgemässen Substanzbehälters mittels einer alternativen Anordnung,
- Fig. 12 -: einen Axialschnitt durch ein modifiziertes Röhrchen des Substanzbehälters und
- Fig. 13 -: eine Schnittdarstellung analog Fig. 1 eines weiteren Ausführungsbeispiels des erfindungsgemässen Substanzbehälters.

Für die nachstehende Beschreibung gilt die folgende Festlegung: Sind in einer Figur zum Zweck zeichnerischer Eindeutigkeit Bezugszeichen angegeben, aber im unmittelbar zugehörigen Beschreibungsteil nicht erwähnt, so wird auf deren Erläuterung in vorangehenden oder nachfolgenden Beschreibungsteilen verwiesen. Umgekehrt sind zur Vermeidung zeichnerischer Überladung für das unmittelbare Verständnis weniger relevante Bezugszeichen nicht in allen Figuren eingetragen. Hierzu wird auf die jeweils übrigen Figuren verwiesen.

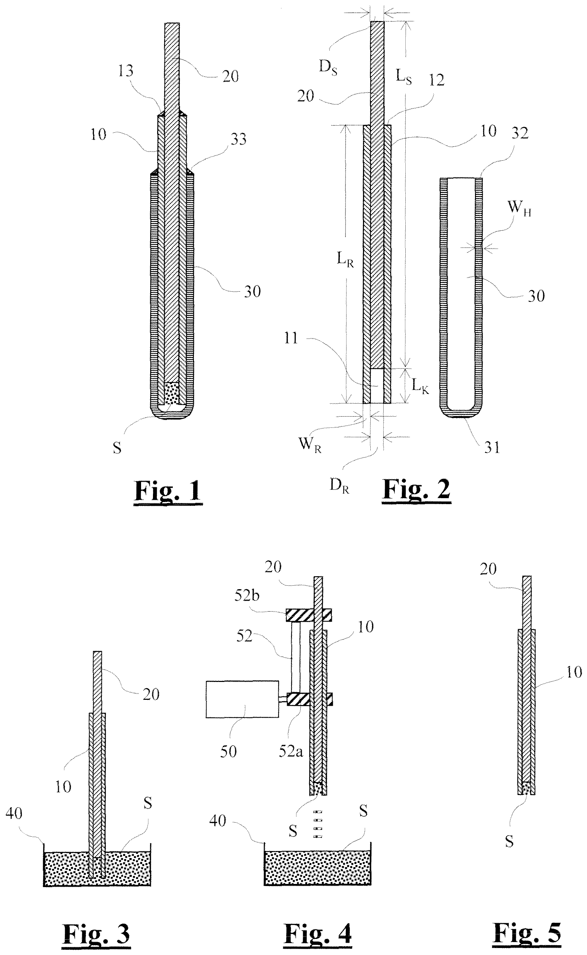

Der in Figur 1 dargestellte Substanzbehälter umfasst drei Komponenten, die bevorzugterweise alle aus Glas bestehen. Die drei Komponenten sind ein Glasröhrchen 10, ein Glasstempel 20 und eine im Querschnitt U-förmige, einseitig geschlossene Glashülse 30 mit einem Bodenteil 31. Grundsätzlich können, wie schon erwähnt, die drei Komponenten auch aus einem anderen Material als Glas bestehen. Im Folgenden wird, ohne die Erfindung auf das Material Glas einzuschränken, die Erfindung rein beispielsweise nur noch anhand eines Glasstempels, eines Glasröhrchens und einer Glashülse beschrieben.

Das Glasröhrchen 10, der Glasstempel 20 und die Glashülse 30 sind zylindrisch bzw. hohlzylindrisch mit kreisförmigem Querschnitt ausgebildet. Sie können aber auch einen anderen als einen kreisrunden Querschnitt aufweisen, wobei jedoch aus herstellungstechnischen Gründen ein kreisförmiger Querschnitt bzw. eine zylindrische bzw. hohlzylindrische Gestalt bevorzugt wird.

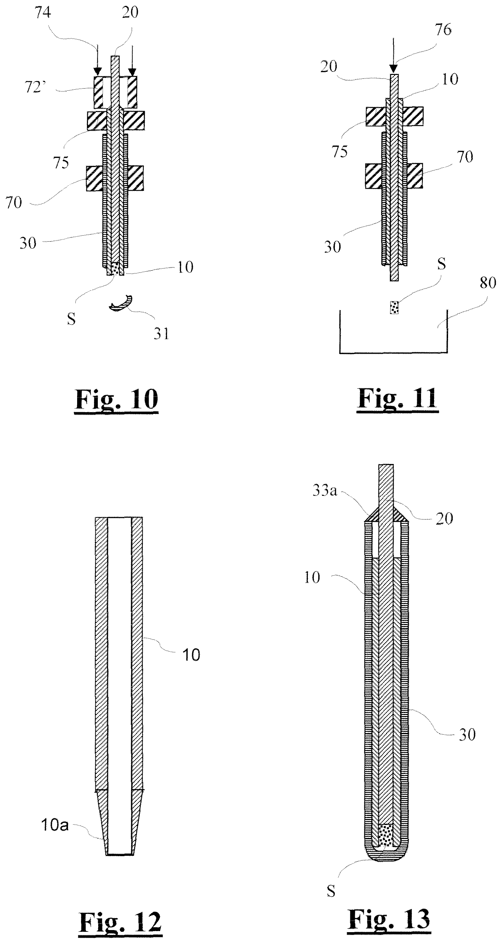

Die Gestalt des Röhrchens 10 verleiht diesem trotz Dünnwandigkeit eine relativ grosse Steifigkeit, welche für das Einstechen in feste(re) Substanzen oder kompaktere Pulver von Bedeutung ist. Die Dünnwandigkeit ist ebenfalls für das Einstechen oder das Abschaben von Substanz von einem Wandteil eines Vorratsbehälters wichtig. Zusätzlich oder alternativ kann, wie dies in Fig. 12 dargestellt ist, ein Ende 10a des Röhrchens 10 auch angeschärft bzw. schneidenartig ausgebildet sein. Weiters kann es auch vorteilhaft sein, das Eintauch- bzw. Einstechende des Röhrchens 10 sich nach aussen (geringfügig) erweiternd auszubilden.

Der Glasstempel 20, der vorzugsweise als Glasstab oder alternativ als zumindest an einem Ende geschlossenes Glasrohr ausgebildet sein kann, ist dicht gleitend im Glasröhrchen angeordnet. Das Glasröhrchen 10 sitzt in der Glashülse 30 und steht auf dem gekrümmten Übergang zwischen Wand und Bodenteil 31 der Glashülse 30 auf. Das Glasröhrchen 10 ist etwas länger als die Glashülse 30, so dass es aus der Glashülse 30 herausragt. Der Glasstempel 20 ist etwas länger als das Glasröhrchen 10 und ragt aus diesem heraus. Der Glasstempel 20 ist so im Glasröhrchen angeordnet, dass er das Glasröhrchen 10 nicht komplett ausfüllt, sondern an dessen unterem Ende eine Substanzkammer 11 verbleibt (Fig. 2), wobei das Aufnahmevolumen der Substanzkammer durch axiales Verstellen des Glasstempels 20 den jeweiligen Erfordernissen angepasst werden kann.

Im befüllten Zustand des Substanzbehälters (Fig. 1) nimmt das untere Ende des Glasröhrchens 10 bzw. die Substanzkammer 11 eine Substanz S auf. Das Glasröhrchen 10 und die Glashülse 30 sind längs des oberen Rands 32 der Glashülse 10 miteinander verbunden, vorzugsweise verschweisst. Die Verbindungsstelle bzw. Schweissnaht ist mit 33 bezeichnet. In analoger Weise sind der Glasstempel 20 und das Glasröhrchen 10 längs des oberen Rands 12 des Glasröhrchens miteinander verbunden, vorzugsweise verschweisst, wobei die Verbindungsstelle bzw. Schweissnaht mit 13 bezeichnet ist. Die beiden Verbindungsstellen bzw. Schweissnähte 13 und 33 haben nur eine relativ geringe Stabilität, so dass sie durch axiale Krafteinwirkung einfach aufgebrochen werden können, ohne dabei das Glasröhrchen 10 und den Glasstempel 20 und die Glashülse 30 zu zerstören.

Die Länge L_{R} des Glasröhrchens 10 beträgt beispielsweise etwa 70 mm, die etwas grössere Länge L_{S} des Glasstempels 20 beträgt beispielsweise etwa 80 mm. Der Innendurchmesser D_{R} des Glasröhrchens 10 liegt im Bereich von 0.05 bis 5 mm, vorzugsweise 0.1 bis 2 mm, ganz besonders bevorzugt im Bereich von 0.1 bis 1 mm. Die Wandstärke W_{R} des Glasröhrchens 10 beträgt vorzugsweise 0.03 bis 0.2 mm. Der Aussenquerschnitt des Glasstempels 20 ist passgenau an den Innenquerschnitt des Glasröhrchens 10 angepasst, wobei der Aussendurchmesser D_{S} des Glasstempels 20 vorzugsweise nur um 0.01 - 0.02 mm geringer ist als der Innendurchmesser D_{R} des Glasröhrchens 10. Bei einem leicht flexiblen Material kann der Stempel 20 auch einen ganz wenig grösseren Durchmesser als der Innendurchmesser des Röhrchens aufweisen. Die Wandstärke W_{H} der Glashülse 30 beträgt vorzugsweise 0.03 bis 0.2 mm.

Das Volumen der Substanzkammer 11 des Glasröhrchens 10 ist so bemessen, dass die Substanzkammer 11 abhängig vom Innendurchmesser D_{R} des Glasröhrchens 10 und vom spezifischen Gewicht der aufzunehmenden Substanz S eine Substanzmenge von einigen Hundert mg bis hinab in den Sub-Milligramm-Bereich aufnehmen kann. Das Volumen der Substanzkammer 11 ist definiert durch den Innendurchmesser D_{R} sowie die (durch entsprechendes Positionieren des Glasstempels 20 einstellbare) Länge L_{K} der Substanzkammer 11 (Fig. 2).

Im Folgenden ist anhand der Figuren 3-9 erläutert, wie der erfindungsgemässe Substanzbehälter befüllt, zusammengebaut und wieder entleert wird.

Zunächst wird das Glasröhrchen 10 mit dem darin befindlichen Glasstempel 20 mit seinem unteren Ende, das die Substanzkammer 11 bildet, in die in einem Vorratsgefäss 40 bereitgehaltene aufzunehmende Substanz S eingetaucht (Fig. 3). Unter Eintauchen wird dabei je nach Konsistenz der Substanz S auch ein Einstechen verstanden. Das Eintauchen bzw. Einstechen des Glasröhrchens kann manuell oder z.B. mittels eines Dosierroboters erfolgen. Durch das Eintauchen bzw. Einstechen des Glasröhrchens 10 in die Substanz S dringt diese in die Substanzkammer 11 des Glasröhrchens 10 ein und wird dort je nach Konsistenz durch Adhäsions- und/oder Kapillarkräfte festgehalten.

Daraufhin wird das Glasröhrchen 10 zusammen mit dem Glasstempel 20 über das Vorratsgefäss 40 angehoben. In einem optionalen Dosierschritt wird nun mittels des Glasstempels 20 (gegebenenfalls in mehreren Schritten) so viel Substanz aus dem Glasröhrchen 10 ausgestossen, bis die in der Substanzkammer verbleibende Substanzmenge einer gewünschten Soll-Menge entspricht. Es kann auch die gesamte aufgenommene Substanz ausgestossen werden und mit einer allenfalls durch Justieren der Länge L_{K} angepassten Substanzkammer 11 erneut Substanz aufgenommen werden. Diese Schritte erfolgen vorteilhafterweise unter der Kontrolle einer Waage 50, an der das Glasröhrchen 10 mittels eines ersten Greifarms 52a eines Greiforgans 52 befestigt ist (Fig. 4). Das Greiforgan 52 besitzt einen zweiten Greifarm 52b, welcher den Glasstempel 20 festhält. Insbesondere zum Aufnehmen von Substanz ist es wichtig, auch den Glasstempel zu fixieren, damit dieser erstens nach dem Aufnehmen der Substanz nicht auf derselben liegt und damit durch z.B. Schläge einen Impuls auslöst, welcher die Substanz vorzeitig oder ungewollt abgeben könnte. Zweitens wird der Glasstempel festgehalten, damit die Substanzkammer verstellt werden kann.

Wird zum Beispiel dem System in Auftrag gegeben, dass 15 mg Substanz aufgenommen werden soll und werden dann effektiv 22 mg aufgenommen (was die Waage misst), wird die Substanz allenfalls wieder abgegeben und die Substanzkammer durch Verstellen des Stempels entsprechend verstellt - unter Berücksichtigung, dass ein kleiner Teil der Substanz allenfalls an der Vorrichtung kleben bleibt (kann ebenfalls kalibriert werden).

Nach diesen Schritten enthält das Glasröhrchen 10 die gewünschte Substanzmenge S (Fig. 5).

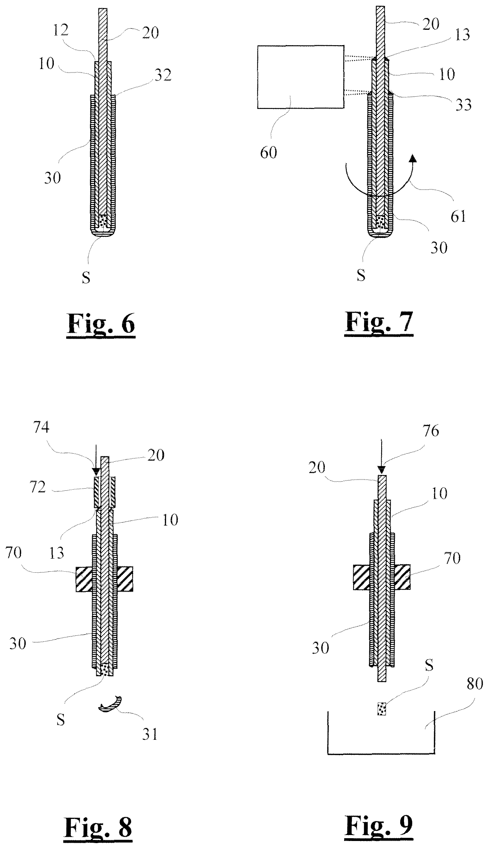

Im nächsten Schritt wird das mit der Substanz S befüllte Glasröhrchen 10 mit dem Glasstempel 20 in die Glashülse 30 eingebracht (Fig. 6).

Anschliessend werden das Glasröhrchen 10 und die Glashülse 30 einerseits und das Glasröhrchen 10 und der Glasstempel 20 anderseits längs ihrer Ränder 12 und 32 miteinander verschweisst, wobei zwei umlaufende Schweissnähte 13 und 33 entstehen (Fig. 7). Die Verschweissung kann vorzugsweise mittels eines Laser-Schweissgeräts 60 erfolgen, wobei die Glashülse 30 zusammen mit dem Glasröhrchen 10 und dem Glasstempel 20 um ihre Achsen gedreht werden. Die Drehbewegung ist in Fig. 7 durch einen Pfeil 61 symbolisiert.

Nach der Verschweissung bzw. Versiegelung des Behälters ist dieser transportbereit und die Substanz darin luftdicht eingeschlossen und geschützt.

Zur Entnahme der im Behälter befindlichen Substanz S am Einsatzort wird zunächst die Glashülse 30 geöffnet (Fig. 8). Dies erfolgt vorzugsweise durch kurze, schlagartige axiale Krafteinwirkung auf den oberen Rand des Glasröhrchens 10 bzw. auf die Schweissnaht 13, wobei die Glashülse 30 mittels eines geeigneten Greiforgans 70 festgehalten wird. Die Krafteinwirkung kann z.B. über eine auf den Glasstempel 20 geschobene und auf der Schweissnaht 13 bzw. dem Rand des Glasröhrchens 10 aufsitzende Hülse 72 erfolgen, die mit einer durch einen Pfeil 74 symbolisierten axialen Kraft beaufschlagt wird. Durch die schlagartige Krafteinwirkung wird die Schweissnaht 33 zwischen Glasröhrchen 10 und Glashülse 30 aufgebrochen und das Glasröhrchen 10 geringfügig relativ zur Glashülse 30 bewegt. Dies wiederum bewirkt, dass der Bodenteil 31 der Glashülse 30 abgesprengt wird.

Fig. 10 veranschaulicht eine alternative Anordnung zur Öffnung der Glashülse 30. Hierbei werden die Glashülse 30 mittels des Greiforgans 70 und gleichzeitig das Glasröhrchen 10 mittels eines weiteren Greiforgans 75 festgehalten. Die Öffnung der Glashülse 30 erfolgt durch kurze, schlagartige axiale Krafteinwirkung auf das Glasröhrchen 10. Die Krafteinwirkung erfolgt über eine auf den Glasstempel 20 geschobene und auf dem Greiforgan 75 aufsitzende Hülse 72', die mit einer durch den Pfeil 74 symbolisierten axialen Kraft beaufschlagt wird. Alternativ können die beiden Greiforgane 70 und 75 gegeneinander bewegt werden (oder das eine Greiforgan festgehalten und das andere Greiforgan impulsartig auf kurzer Distanz nach unten bzw. oben bewegt werden). Durch die schlagartige Krafteinwirkung wird die Schweissnaht 33 zwischen Glasröhrchen 10 und Glashülse 30 aufgebrochen und das Glasröhrchen 10 geringfügig relativ zur Glashülse 30 bewegt. Dies wiederum bewirkt, dass der Bodenteil 31 der Glashülse 30 abgesprengt wird.

Sofern noch nicht geschehen, wird der Behälter nun über einem Aufnahmegefäss 80 positioniert (Figuren 9 und 11). Dann wird der Glasstempel 20 mit einer durch einen Pfeil 76 symbolisierten axialen Kraft beaufschlagt, wobei der Behälter an seiner Glashülse 30 mittels des Greiforgans 70 stationär gehalten wird. Falls der Druck des Greiforgans sich nicht durch flexibles Nachgeben der dünnen Wand der Glashülse 30 direkt auf das Glasröhrchen 10 überträgt, wird auch dieses durch das weitere Greiforgan 75 stationär gehalten (Fig. 11). Durch die Kraftbeaufschlagung wird zunächst die Schweissnaht 13 zwischen dem Glasröhrchen 10 und dem Glasstempel 20 aufgebrochen und dann der Glasstempel 20 relativ zum Glasröhrchen 10 nach unten verschoben, wodurch die in der Substanzkammer des Glasröhrchens 10 befindliche Substanz S aus dem Glasröhrchen 10 ausgestossen wird und in das Aufnahmegefäss 80 fällt.

Abschliessend wird der Substanzbehälter entsorgt.

In der Fig. 13 ist eine modifizierte Ausführungsform des erfindungsgemässen Substanzbehälters dargestellt. Der Unterschied zur Ausführungsform gem. Fig. 1 besteht darin, dass hier die Hülse 30 nicht mit dem Röhrchen 10, sondern mit dem Stempel 20 verbunden bzw. verschweisst ist. Die Verbindungs- bzw. Schweissnaht ist mit 33a bezeichnet.

Während das Befüllen und Zusammenbauen des Substanzbehälters im Wesentlichen gleich wie beim Ausführungsbeispiel gem. Fig. 1 erfolgen kann, erfordern das Aufbrechen und die Entleerung des Substanzbehälters ein etwas anderes Vorgehen.

Dazu wird zuerst der Stempel 20 mit der Substanz S nach unten gedrückt, wobei einerseits die Schweissnaht 33a aufgebrochen und dann der Boden der Hülse 30 zerschlagen wird. Alternativ kann der Substanzbehälter in den Aufnahmebehälter gestossen und dadurch der Boden der Hülse 30 aufgeschlagen werden. Die Hülse 30 kann eine etwas dickere Wandstärke aufweisen, sofern nur der Bodenteil entsprechend dünn ausgebildet ist oder eine Sollbruchstelle vorgesehen ist, so dass die Hülse leicht aufgebrochen werden kann.

Der erfindungsgemässe Substanzbehälter ist für die Aufnahme von unterschiedlichsten Substanzen von pulverförmig, flüssig, ölig, klebend, zähflüssig, wachsartig bis schokoladeartig oder gemüse- oder obstartig etc. geeignet. Alle Komponenten des Behälters bestehen vorteilhafterweise aus Glas und sind einfach und kostengünstig herstellbar. Das Glasröhrchen des Behälters zusammen mit dem darin angeordneten Glasstempel kann auch direkt als Dosierwerkzeug in einer Dosiervorrichtung eingesetzt werden. Zum Transport der Substanz braucht die Substanz dann nicht erst in ein separates Transportgefäss abgefüllt zu werden, sondern kann - nach Vervollständigung des Behälters durch die Anbringung der Glashülse und durch gegenseitige Verschweissung seiner drei Komponenten - direkt im Dosierwerkzeug transportiert werden. Das Befüllen des Behälters ist aus praktisch jedem gängigen Vorratsgefäss ohne irgendwelche Adapter möglich, solange der Substanzbehälter die nötige Länge und einen entsprechend kleineren Durchmesser als der Vorratsbehälter hat. Umgekehrt ist auch die Entleerung des Behälters in jedes gängige Aufnahmegefäss möglich. Der erfindungsgemässe Substanzbehälter ist speziell für Substanzmengen von einigen Hundert mg und vor allem bis hinunter in den Sub-Milligramm-Bereich geeignet. Durch die gegenseitige Verbindung, vorzugsweise Verschweissung bzw. Versiegelung seiner drei Komponenten ist die im Behälter befindliche Substanz optimal vor äusseren Einflüssen geschützt, vor allem wenn das Abfüllen der Substanz respektive auch das Verschweissen des Substanzbehälters vorteilhafterweise unter einem chemisch inerten Gas wie Stickstoff oder noch bevorzugter Argon durchgeführt wird.

## Patentansprüche

1. Behälter zur Aufnahme und Abgabe einer Substanz, **gekennzeichnet durch** ein Röhrchen (10), einen im Röhrchen (10) dicht gleitend verstellbar angeordneten Stempel (20) und eine einseitig geschlossene Hülse (30), in der das Röhrchen (10) aufgenommen ist, wobei der Stempel (20) aus einem Ende des Röhrchens (10) herausragt, und wobei der Stempel (20) das Röhrchen (10) nicht vollständig ausfüllt, so dass im Bereich des innerhalb der Hülse (30) befindlichen anderen Endes des Röhrchens (10) eine Substanzkammer (11) verbleibt, die ein Aufnahmevolumen aufweist, das durch Verstellen des Stempels (20) anpassbar ist.

2. Behälter nach Anspruch 1, **dadurch gekennzeichnet, dass** das Röhrchen (10) aus der Hülse (30) herausragt und dass das Röhrchen (10) und die Hülse (30) längs des Rands (32) der Hülse (30) an deren offenem Ende miteinander verbunden, vorzugsweise verschweisst, sind.

3. Behälter nach einem der vorangehenden Ansprüche, **dadurch gekennzeichnet, dass** der Stempel (20) und das Röhrchen (10) längs des Rands (12) des Röhrchens an dessen einem Ende miteinander verbunden, vorzugsweise verschweisst, sind.

4. Behälter nach einem der Ansprüche 1-2, **dadurch gekennzeichnet, dass** der Stempel (20) aus der Hülse (30) herausragt und dass der Stempel (20) mit der Hülse (30) verbunden, vorzugsweise verschweisst ist.

5. Behälter nach einem der vorangehenden Ansprüche, **dadurch gekennzeichnet, dass** das Röhrchen zylindrisch ausgebildet ist und einen Innendurchmesser (D_{R}) im Bereich von 0.05 bis 5 mm, vorzugsweise von 0.1 bis 2 mm, besonders bevorzugt von 0.1 bis 1 mm, aufweist.

6. Behälter nach einem der vorangehenden Ansprüche, **dadurch gekennzeichnet, dass** das Röhrchen (10) eine Wandstärke (W_{R}) im Bereich von 0.03 bis 0.2 mm aufweist.

7. Behälter nach einem der vorangehenden Ansprüche, **dadurch gekennzeichnet, dass** das Röhrchen (10) an einem Ende (10a) scharfkantig bzw. schneidenartig ausgebildet ist.

8. Behälter nach einem der vorangehenden Ansprüche, **dadurch gekennzeichnet, dass** die Hülse (30) eine Wandstärke (W_{H}) im Bereich von 0.03 bis 0.2 mm aufweist.

9. Behälter nach einem der vorangehenden Ansprüche, **dadurch gekennzeichnet, dass** der Stempel (20) als Stab oder als zumindest einseitig geschlossenes Rohr ausgebildet ist.

10. Behälter nach einem der vorangehenden Ansprüche, **dadurch gekennzeichnet, dass** die Hülse (30) so ausgebildet ist, dass sie vom Röhrchen (10) oder dem Stempel (20) durch axiale Kraftbeaufschlagung desselben aufbrechbar ist.

11. Behälter nach einem der vorangehenden Ansprüche, **dadurch gekennzeichnet, dass** die Hülse (30) einen absprengbaren Bodenteil (31) aufweist.

12. Behälter nach einem der vorangehenden Ansprüche, **dadurch gekennzeichnet, dass** das Röhrchen (10), der Stempel (20) und die Hülse (30) aus Glas bestehen.

13. Kit zur Herstellung eines Behälters nach einem der vorangehenden Ansprüche, **gekennzeichnet durch** ein Röhrchen (10), einen Stempel (20) und eine einseitig geschlossene Hülse (30), wobei der Stempel (20) so auf das Röhrchen (10) abgestimmt ist, dass er in das Röhrchen einführbar ist und in diesem dicht gleitend verstellbar ist, wobei der Stempel (20) das Röhrchen (10) nicht vollständig ausfüllt, so dass eine Substanzkammer (11) verbleibt, die ein Aufnahmevolumen aufweist, das durch Verstellen des Stempels (20) anpassbar ist, und wobei die Hülse (30) so auf das Röhrchen (10) abgestimmt ist, dass das Röhrchen (10) in ihr aufnehmbar ist.

14. Verfahren zum Befüllen eines Behälters gemäss einem der Ansprüche 1-12, **gekennzeichnet durch** die folgenden Schritte:
- Eintauchen bzw. Einstechen des mit dem Stempel (20) versehenen Röhrchens (10) in eine Substanz (S) und dadurch Aufnahme von Substanz in die Substanzkammer (11) des Röhrchens (10),
- Positionieren des Röhrchens (10) zusammen mit dem Stempel (20) in der Hülse (30), und
- entweder
- Verbinden des Rands (32) der Hülse (30) an deren offenem Ende mit dem Stempel (20)
- oder
- Verbinden des Rands (32) der Hülse (30) an deren offenem Ende mit dem Röhrchen (10) und Verbinden des Rands (12) des Röhrchens (10) an dessen ausserhalb der Hülse (30) befindlichem Ende mit dem Stempel (20).

15. Verfahren nach Anspruch 14, **dadurch gekennzeichnet, dass** die Verbindung zwischen der Hülse (30) und dem Röhrchen (10) bzw. dem Stempel (20) und/oder die Verbindung zwischen dem Röhrchen (10) und dem Stempel (20) durch Verschweissen erfolgt.

16. Verfahren nach Anspruch 14 oder 15, **dadurch gekennzeichnet, dass** nach dem Eintauchen bzw. Einstechen des Röhrchens (10) in die aufzunehmende Substanz (S) ein Dosierschritt erfolgt, bei dem mittels des Stempels (20) solange Substanz aus dem Röhrchen (10) ausgestossen wird, bis die verbleibende Substanzmenge einer gewünschten Ziel-Menge entspricht.

17. Verfahren nach Anspruch 16, **dadurch gekennzeichnet, dass** der Dosierschritt unter der Kontrolle einer Waage (50) durchgeführt wird.

18. Verfahren nach Anspruch 17, **dadurch gekennzeichnet, dass**, falls die gewünschte Zielmenge unterschritten wurde, die Substanzkammer (11) entleert und erneut Substanz aufgenommen wird.

19. Verfahren nach Anspruch 18, **dadurch gekennzeichnet, dass** das Aufnahmevolumen der Substanzkammer (11) mittels des Stempels (20) angepasst wird.

20. Verfahren nach einem der Ansprüche 14-19, **dadurch gekennzeichnet, dass** Substanzbehälter unter einer Inertgasatmosphäre luftdicht verschlossen wird.

21. Verfahren zum Entleeren eines Behälters gemäss einem der Ansprüche 1-12, **gekennzeichnet durch** die folgenden Schritte:
entweder
- Absprengen eines Bodenteils (31) der Hülse (30) durch axiale Krafteinwirkung auf das Röhrchen (10) bei festgehaltener Hülse (30) und
- Ausstossen der in der Substanzkammer (11) enthaltenen Substanz durch axiale Verschiebung des Stempels (20) im Röhrchen (10)
oder
- Absprengen eines Bodenteils (31) der Hülse (30) durch axiale Krafteinwirkung auf den Stempel (20) und
- Ausstossen der in der Substanzkammer (11) enthaltenen Substanz durch axiale Verschiebung des Stempels (20) im Röhrchen (10)
oder
- Aufschlagen des Behälters und dadurch Absprengen eines Bodenteils (31) der Hülse (30) und
- Ausstossen der in der Substanzkammer (11) enthaltenen Substanz durch axiale Verschiebung des Stempels (20) im Röhrchen (10).

## Claims

1. Container for taking up and dispensing a substance, **characterized by** a tubule (10), a punch (20) disposed in the tubule (10) so as to slide adjustably, forming a seal, and a sleeve (30) closed on one side, in which the tubule (10) is accommodated, wherein the punch (20) projects out of one end of the tubule (10), and wherein the punch (20) does not fill the tubule (10) completely, so that a substance chamber (11) remains in the region of the other end of the tubule (10), which end is situated within the sleeve (30), which chamber has a holding volume that is adaptable by means of adjusting the punch (20) .

2. Container according to claim 1, **characterized in that** the tubule (10) projects out of the sleeve (30) and that the tubule (10) and the sleeve (30) are connected with one another along the edge (32) of the sleeve (30) at its open end, preferably welded.

3. Container according to one of the preceding claims, **characterized in that** the punch (20) and the tubule (10) are connected with one another along the edge (12) of the tubule, at its one end, preferably welded.

4. Container according to one of claims 1-2, **characterized in that** the punch (20) projects out of the sleeve (30) and that the punch (20) is connected with the sleeve (30), preferably welded.

5. Container according to one of the preceding claims, **characterized in that** the tubule is configured to be cylindrical and has an inside diameter (D_{R}) in the range of 0.05 to 5 mm, preferably of 0.1 to 2 mm, particularly preferably of 0.1 to 1 mm.

6. Container according to one of the preceding claims, **characterized in that** the tubule (10) has a wall thickness (W_{R}) in the range of 0.03 to 0.2 mm.

7. Container according to one of the preceding claims, **characterized in that** the tubule (10) is configured to have a sharp edge or configured in the manner of a blade at one end (10a).

8. Container according to one of the preceding claims, **characterized in that** the sleeve (30) has a wall thickness (W_{H}) in the range of 0.03 to 0.2 mm.

9. Container according to one of the preceding claims, **characterized in that** the punch (20) is configured as a rod or as a tube closed on at least one side.

10. Container according to one of the preceding claims, **characterized in that** the sleeve (30) is configured in such a manner that it can be broken open by the tubule (10) or the punch (20), by means of applying axial force with these parts.

11. Container according to one of the preceding claims, **characterized in that** the sleeve (30) has a bottom part (31) that can be split off.

12. Container according to one of the preceding claims, **characterized in that** the tubule (10), the punch (20), and the sleeve (30) consist of glass.

13. Kit for producing a container according to one of the preceding claims, **characterized by** a tubule (10), a punch (20), and a sleeve (30) closed on one side, wherein the punch (20) is coordinated with the tubule (10) in such a manner that it can be introduced into the tubule and adjusted to slide in it, forming a seal, wherein the punch (20) does not fill the tubule (10) completely, so that a substance chamber (11) remains, which has a holding volume that can be adapted by adjusting the punch (20), and wherein the sleeve (30) is coordinated with the tubule (10) in such a manner that the tubule (10) can be accommodated in it.

14. Method for filling a container according to one of claims 1-12, **characterized by** the following steps:
- immersing or inserting the tubule (10) provided with the punch (20) into a substance (S) and thereby taking up substance into the substance chamber (11) of the tubule (10),
- positioning the tubule (10), together with the punch (20), in the sleeve (30), and
either
- connecting the edge (32) of the sleeve (30), at its open end, with the punch (20),
or
- connecting the edge (32) of the sleeve (30), at its open end, with the tubule (10), and connecting the edge (12) of the tubule (10) at its end situated outside of the sleeve (30) with the punch (20).

15. Method according to claim 14, **characterized in that** the connection between the sleeve (30) and the tubule (10) or the punch (20) and/or the connection between the tubule (10) and the punch (20) is/are produced by welding.

16. Method according to claim 14 or 15, **characterized in that** after immersing or inserting the tubule (10) into the substance (S) to be taken up, a metering step takes place, during which step substance is ejected from the tubule (10) by means of the punch (20) until the remaining substance amount corresponds to a desired target amount.

17. Method according to claim 16, **characterized in that** the metering step is carried out with monitoring by a scale (50).

18. Method according to claim 17, **characterized in that** if the desired target amount was not reached, the substance chamber (11) is emptied and substance is taken up once again.

19. Method according to claim 18, **characterized in that** the holding volume of the substance chamber (11) is adapted by means of the punch (20).

20. Method according to one of claims 14-19, **characterized in that** the substance container is sealed in airtight manner under an inert gas atmosphere.

21. Method for emptying a container according to one of claims 1-12, **characterized by** the following steps:
either
- splitting off a bottom part (31) of the sleeve (30) by means of the action of axial force on the tubule (10) while the sleeve (30) is held in place, and
- ejecting the substance contained in the substance chamber (11) by means of axial displacement of the punch (20) in the tubule (10),
or
- splitting off a bottom part (31) of the sleeve (30) by means of the action of axial force on the punch (20), and
- ejecting the substance contained in the substance chamber (11) by means of axial displacement of the punch (20) in the tubule (10),
or
- striking the container and thereby splitting off a bottom part (31) of the sleeve (30), and
- ejecting the substance contained in the substance chamber (11) by means of axial displacement of the punch (20) in the tubule (10).

## Revendications

1. Récipient pour recevoir et distribuer une substance, **caractérisé par** un tube (10), un poinçon (20) agencé de façon mobile en coulissement étanche dans le tube (10), et une douille (30) fermée sur un côté, dans laquelle est logé le tube (10), le poinçon (20) dépassant d'une extrémité du tube (10) et le poinçon (20) ne remplissant pas complètement le tube (10), de sorte que dans la zone de l'autre extrémité du tube (10) située à l'intérieur de la douille (30), il demeure une chambre à substance (11) qui présente un volume de réception qui est adaptable par déplacement du poinçon (20).

2. Récipient selon la revendication 1, **caractérisé en ce que** le tube (10) dépasse de la douille (30) et **en ce que** le tube (10) et la douille (30) sont reliés l'un à l'autre, de préférence par soudage, le long du bord (32) de la douille (30) à son extrémité ouverte.

3. Récipient selon l'une des revendications précédentes, **caractérisé en ce que** le poinçon (20) et le tube (10) sont reliés l'un à l'autre, de préférence par soudage, le long du bord (12) du tube à l'une de ses extrémités.

4. Récipient selon l'une des revendications 1 ou 2, **caractérisé en ce que** le poinçon (20) dépasse de la douille (30), et **en ce que** le poinçon (20) est relié à la douille (30), de préférence par soudage.

5. Récipient selon l'une des revendications précédentes, **caractérisé en ce que** le tube est réalisé cylindrique et présente un diamètre intérieur (D_{R}) dans la plage de 0,05 à 5 mm, de préférence de 0,1 à 2 mm, de manière particulièrement préférée de 0,1 à 1 mm.

6. Récipient selon l'une des revendications précédentes, **caractérisé en ce que** le tube (10) présente une épaisseur de paroi (W_{R}) dans la plage de 0,03 à 0,2 mm.

7. Récipient selon l'une des revendications précédentes, **caractérisé en ce que** le tube (10) est réalisé avec une arête vive ou en forme de tranchant à une extrémité (10a).

8. Récipient selon l'une des revendications précédentes, **caractérisé en ce que** la douille (30) présente une épaisseur de paroi (W_{H}) dans la plage de 0,03 à 0,2 mm.

9. Récipient selon l'une des revendications précédentes, **caractérisé en ce que** le poinçon (20) est réalisé sous forme de barreau ou sous forme de tube fermé au moins sur un côté.

10. Récipient selon l'une des revendications précédentes, **caractérisé en ce que** la douille (30) est réalisée de manière à pouvoir être ouverte par rupture par le tube (10) ou par le poinçon (20) par application d'une force axiale de celui-ci.

11. Récipient selon l'une des revendications précédentes, **caractérisé en ce que** la douille (30) présente une partie de fond (31) susceptible de s'enlever par éclatement.

12. Récipient selon l'une des revendications précédentes, **caractérisé en ce que** le tube (10), le poinçon (20) et la douille (30) sont constitués en verre.

13. Kit pour réaliser un récipient selon l'une des revendications précédentes, **caractérisé par** un tube (10), un poinçon (20) et une douille (30) fermée sur un côté, dans lequel le poinçon (20) est adapté au tube (10) de manière à pouvoir être introduit dans le tube et à être mobile en coulissement étanche dans celui-ci, le poinçon (20) ne remplit pas complètement le tube (10) de sorte qu'il demeure une chambre à substance (11) qui présente un volume de réception qui est adaptable par déplacement du poinçon (20), et la douille (30) est adaptée au tube (10) de manière à pouvoir recevoir dans elle-même le tube (10).

14. Procédé de remplissage d'un récipient selon l'une des revendications 1 à 12, **caractérisé par** les étapes suivantes consistant à:
- immerger ou enfoncer le tube (10) pourvu du poinçon (20) dans une substance (S) et recevoir ainsi de la substance dans la chambre à substance (11) du tube (10),
- positionner le tube (10) conjointement avec le poinçon (20) dans la douille (30), et
soit
- relier le bord (32) de la douille par son extrémité ouverte au poinçon (20),
soit encore
- relier le bord (32) de la douille (30) par son extrémité ouverte au tube (10) et relier le bord (12) du tube (10) au poinçon (20) par son extrémité située à l'extérieur de la douille (30).

15. Procédé selon la revendication 14, **caractérisé en ce que** la liaison entre la douille (30) et le tube (10) ou le poinçon (20) et/ou la liaison entre le tube (10) et le poinçon (20) s'effectue par soudage.

16. Procédé selon la revendication 14 ou 15, **caractérisé en ce qu'**après avoir immergé ou enfoncé le tube (10) dans la substance (S) à recevoir, on met en oeuvre une étape de dosage dans laquelle de la substance est éjectée hors du tube (10) au moyen du poinçon (20) jusqu'à ce que la quantité de substance restante corresponde à une quantité cible désirée.

17. Procédé selon la revendication 16, **caractérisé en ce que** l'étape de dosage est mise en oeuvre sous le contrôle d'une balance (50).

18. Procédé selon la revendication 17, **caractérisé en ce que** si on passe au-dessous de la quantité cible désirée, la chambre à substance (11) est vidée et de la substance est reçue de nouveau.

19. Procédé selon la revendication 18, **caractérisé en ce que** le volume de réception de la chambre à substance (11) est adapté au moyen du poinçon (20).

20. Procédé selon l'une des revendications 14 à 19, **caractérisé en ce que** le récipient à substance est refermé de façon étanche à l'air sous une atmosphère de gaz inerte.

21. Procédé pour vider un récipient selon l'une des revendications 1 à 12, **caractérisé par** les étapes suivantes consistant à:
soit
- faire éclater une partie de fond (31) de la douille (30) par l'action d'une force axiale sur le tube (10), la douille (30) étant retenue, et
- éjecter la substance contenue dans la chambre à substance (11) par translation axiale du poinçon (20) dans le tube (10),
soit
- faire éclater une partie de fond (31) de la douille (30) par l'action d'une force axiale sur le poinçon (20), et
- éjecter la substance contenue dans la chambre à substance (11) par translation axiale du poinçon (20) dans le tube (10),
soit encore
- ouvrir par rupture le récipient et ainsi faire éclater une partie de fond (31) de la douille (30), et
- éjecter la substance contenue dans la chambre à substance (11) par translation axiale du poinçon (20) dans le tube (10) .
